# NEUE EUROPÄISCHE PATENTSCHRIFT

(11) **EP 0 863 960 B2**
(45) Veröffentlichungstag und Bekanntmachung des Hinweises auf die Entscheidung über den Einspruch: **25.06.2008**
(45) Hinweis auf die Patenterteilung: 13.10.1999
(21) Anmeldenummer: 96942338.3
(22) Anmeldetag: 04.12.1996
(51) Int. Cl.: C09K 5/00, C23F 11/14, C23F 11/12

(54) **GEFRIERSCHUTZMITTEL**
ANTIFREEZE AGENT
CONCENTRE ANTIGEL

(30) Priorität: 13.12.1995 DE 19546472
(43) Veröffentlichungstag der Anmeldung: 16.09.1998
(73) Patentinhaber: Haertol Chemie GmbH, 39126 Magdeburg (DE)
(72) Erfinder: BRINCK, Carmen, D-39108 Magdeburg (DE); DÜHRING, Egon, D-39167 Irxleben (DE)
(74) Vertreter: Weber, Thomas
(86) Internationale Anmeldenummer: PCT/EP1996/005407
(87) Internationale Veröffentlichungsnummer: WO 1997/021783

(56) Entgegenhaltungen:
- EP-A- 0 564 721
- EP-A- 0 739 965
- GB-A- 1 004 259
- US-A- 3 803 049
- ASTM D1384-70

## Beschreibung

Die Erfindung betrifft ein Kühl- bzw. Wärmeübertragungsmittel auf wäßrigalkoholischer Basis mit einem gegenüber dem Gefrierpunkt von Wasser abgesenktem Gefrierpunkt sowie ein Konzentrat zu dessen Herstellung. Es ist einsetzbar in Kühl- bzw. Wärmeübertragungssystemen wie Klimaanlagen, Wärmeaustauscher und insbesondere Kühlsysteme für Verbrennungsmotoren. Es enthält ein synergistisch wirkendes Inhibitorsystem, dessen besondere Kombination deutlich geringere Einsatzmengen ermöglicht, als im Stand der Technik üblich. Es bietet einen guten Korrosions- und Kavitationsschutz in Anlagen, die aus Leicht-, Schwer- und/oder Buntmetallen und insbesondere aus Kombinationen dieser Werkstoffe bestehen.

Kühlsysteme allgemein und insbesondere Kühlsysteme für Verbrennungsmotoren wie beispielsweise Kraftfahrzeugmotoren bestehen aus einer Vielfalt unterschiedlicher Metalle wie beispielsweise Kupfer, Messing, Stahl, Gußeisen, Aluminium, Magnesium und deren Legierungen. Weiterhin sind üblicherweise Lötmetalle wie beispielsweise Lötzinn vorhanden. Diese Materialzusammensetzung bringt besondere Korrosionsprobleme mit sich, insbesondere in Automobilkühlsystemen, wo hohe Temperaturen, Drucke und Fließgeschwindigkeiten im Kühlsystem vorliegen. Korrosion verkürzt die Lebensdauer des Kühlsystems und führt durch Bildung unerwünschter Ablagerungen zu einer Verringerung der Wirksamkeit. Kühlflüssigkeiten, die beispielsweise für Automobilkühler geeignet sind, müssen daher nicht nur Gefrierpunkte aufweisen, die deutlich unter 0 °C liegen, beispielsweise zwischen -20 und -30 °C. Sie müssen zusätzlich wirksam gegen Korrosion geschützt werden.

Zur Gefrierpunktserniedrigung wird üblicherweise eine wasserlösliche flüssigalkoholische Komponente verwendet, insbesondere Ethylenglykol. Außer dieser Alkoholkomponenten sind Korrosionsschutzwirkstoffe zwingend erforderlich. An diese ist heutzutage die Forderung zu stellen, in besonders niedrigen Konzentrationen wirksam zu sein und möglichst keine toxikologisch bedenklichen und/oder umweltgefährdenden Stoffe zu enthalten.

Im Stand der Technik sind Gefrierschutzmittel für Kühlsysteme bekannt, die außer der Alkoholkomponenten ein Korrosionsschutzsystem enthalten, das auf einer Kombination von bestimmten Carbonsäuren mit Triazolen basiert und dessen Wirksamkeit durch weitere korrosionsschützende Additive wie beispielsweise Borate, Phosphate oder Silicate noch verbessert werden kann.

Beispielsweise lehrt die EP-A-251 480 ein korrosionsinhibiertes Gefrierschutzkonzentrat, das neben 90 bis 99 Gew.-% Alkohol 0,1 bis 5 Gew.-% Alkylbenzoesäure oder deren Salze, 0,1 bis 5 Gew.-% einer aliphatischen Monocarbonsäure mit 8 bis 12 C-Atomen sowie 0,1 bis 0,5 Gew.-% eines Triazols enthält.

Die EP-B-308 037 lehrt eine Frostschutzzusammensetzung mit korrosionsinhibierender Eigenschaft, die im wesentlichen besteht aus: 90 bis 99 Gew.-% eines wasserlöslichen flüssigen alkoholischen Gefrierpunktserniedrigers, 0,1 bis 5 Gew.-% einer aliphatischen einbasigen Säure mit 6 bis 12 C-Atomen, 0,1 bis 5 Gew.-% einer Alkalimetall-Boratverbindung und 0,1 bis 0,5 Gew.-% eines Triazols.

Aus der EP-B-229 440 ist ein alkoholbasiertes Gefrierschutzmittelkonzentrat bekannt, das 0,1 bis 15 Gew.-% einer aliphatischen Monocarbonsäure mit 5 bis 16 C-Atomen, 0,1 bis 15 Gew.-% einer Dicarbonsäure mit 5 bis 16 C-Atomen sowie 0,1 bis 0,5 Gew.-% eines Triazols enthält, wobei die Gewichtsprozentangaben auf der Menge des vorhandenen Flüssigalkohols beruhen. Gemäß der engeren Lehre der 3 vorstehend genannten Dokumente setzt man als Alkoholkomponente vorzugsweise Ethylenglykol, als Triazol vorzugsweise Benzotriazol oder Tolyltriazol ein. Die DD-A-218 635 schlägt vor, als Korrosionsschutzsystem für Kühl- bzw. Wärmeübertragungsmittel ein Gemisch einzusetzen, das 2-Ethylhexansäure, Mercaptobenzthiazol und Carboxymethylcellulose bzw. Umsetzungsprodukte dieser 3 Komponenten enthält. Den Einsatz von Triazolen erwähnt diese Schrift nicht.

Die Erfindung stellt sich die Aufgabe, Gefrierschutzmittel zur Verfügung zu stellen, die frei sind von Nitrit, Phosphat, Borat und Silicat. Weiterhin ist es bevorzugt, jedoch nicht notwendigerweise erforderlich, daß die Gefrierschutzmittel auch frei sind von Nitrat, Aminen oder Ammoniumverbindungen. Weiterhin soll der Stickstoffgehalt der Gefrierschutzmittel dadurch verringert werden, daß durch eine geeignete Kombination der Triazolgehalt unterhalb der im Stand der Technik üblichen Untergrenze von 0,1 Gew.-% liegt.

Diese Aufgabe wird gelöst durch ein Gefrierschutzmittelkonzentrat, welches ein wasserlösliches flüssigalkoholisches Gefrierpunktserniedrigungsmittel, mindestens eine korrosionsinhibierende Carbonsäure und mindestens zwei unterschiedliche Triazole enthält, **dadurch gekennzeichnet**, daß es frei ist von Nitrit, Phosphat, Borat und Silicat und daß es, bezogen auf die Gesamtzusammensetzung,
a) 0,005 bis 5 Gew.-% einer verzweigten aliphatischen Carbonsäure ausgewählt aus 2-Ethylhexansäure, 2,2-Dimethyloctansäure und 3,5,5-Trimethylhexansäure oder Mischungen hiervon,
b) 0,005 bis 0,04 Gew.-% Tolyltriazol,
c) 0,005 bis 0,04 Gew.-% Benzotriazol
d) 40 bis 99,985 Gew.-% flüssigalkoholisches Gefrierpunkterniedrigungsmittel
enthält, wobei ein Rest zu 100 Gew-% aus Alkalien, Wasser und/oder weiteren Wirkstoffen besteht.

Wenn im Rahmen dieser Erfindung von Carbonsäuren die Rede ist, sind damit generell die Säuren in protolysierter oder nichtprotolysierter Form gemeint, d. h. die Säuren können als solche oder als Anionen vorliegen. Das Protolysegleichgewicht der Säuren wird sich je nach pH-Wert des Gefrierschutzmittelkonzentrats oder des hieraus bereiteten Wärmeübertragungsmittels gemäß der Säurekonstanten einstellen. Wäßrige Wärmeübertragungsmittel weisen üblicherweise pH-Werte im leicht alkalischen Gebiet auf, vorzugsweise im Bereich zwischen etwa 7,5 und etwa 8,5, so daß die eingesetzten Säuren weitgehend in ionischer Form vorliegen. Demgemäß ist es bevorzugt, im Rahmen der vorliegenden Erfindung die Säuren direkt in Form ihrer wasserlöslichen Salze einzusetzen bzw. die Säuren in den Konzentraten durch Zugabe von Alkalien, beispielsweise von Natriumhydroxyd, zumindest weitgehend zu neutralisieren. Die Mengenangaben für die Säuren beziehen sich in dieser Schrift jeweils auf die freien Säuren, unabhängig davon, ob diese als solche oder als Salze vorliegen. Entsprechendes gilt für die Triazole, die als solche oder als Alkalisalze eingesetzt werden können.

Das vorstehend beschriebene Konzentrat kann neben dem flüssigalkoholischen Gefrierpunktserniedrigungsmittel zusätzlich Wasser enthalten, wobei der Anteil des Alkohols an der Gesamtmischung jedoch oberhalb von 40 Gew.-% liegt. Geringe Mengen Wasser enthält die Mischung beispielsweise dann, wenn die Säuren als solche eingesetzt und durch Zugabe von Alkalimetallhydroxid neutralisiert werden, da sich dabei Neutralisationswasser bildet.

Bevorzugte Konzentrationsbereiche in den Gefrierschutzmittelkonzentraten betragen für die verzweigten aliphatischen Carbonsäuren der Gruppe a) 0,5 bis 4 Gew.-%, für Tolyltriazol und Benzotriazol jeweils 0,005 bis 0,03 Gew.-%.

Weiterhin ist es bevorzugt, daß das Gefrierschutzmittelkonzentrat als weiteren Wirkstoff zusätzlich 0,5 bis 15 Gew.-% einer oder mehrerer linearer gesättigter oder ungesättigter aliphatischer, araliphatischer oder aromatischer ein- oder mehrbasischer Carbonsäuren mit 4 bis 20 C-Atomen enthält. Die Korrosionsschutzwirkung wird hierdurch deutlich verbessert. Dabei gilt die Untergrenze der Kohlenstoffzahl, 4 C-Atome, für aliphatische Carbonsäuren. Aromatische Carbonsäuren müssen mindestens 7 C-Atome enthalten.

Als weiteren Wirkstoff, der die Korrosionsschutzwirkung insbesondere auf Buntmetallen verstärkt, ist Mercaptobenzthiazol, das man im Konzentrat in Mengen zwischen 0,002 bis 0,5 Gew.-%, vorzugsweise von 0,005 bis 0,05 Gew.-% einsetzt. Die Wirkung des Mercaptobenzthiazols wird durch die zusätzliche Mitverwendung von Carboxymethylcellulose weiter gesteigert. Daher ist es bevorzugt, daß das Gefrierschutzmittelkonzentrat als weiteren Wirkstoff zusätzlich 0,002 bis 0,5 Gew.-%, insbesondere 0,005 bis 0,05 Gew.-% Carboxymethylcellulose enthält. Dabei können Mercaptobenzthiazol und Carboxymethylcellulose unabhängig voneinander dem Gefrierschutzmittelkonzentrat zugegeben werden. Gemäß der Lehre der DD 218 635 ist es jedoch bevorzugt, aus der verzweigten aliphatischen Carbonsäure der Gruppe a), dem Mercaptobenzthiazol und der Carboxymethylcellulose bei erhöhter Temperatur (50 bis 65 °C) ein Vorgemisch herzustellen, indem es zu partiellen Umsetzungen dieser Reaktionspartner kommen kann. Dieses Vorprodukt stellt man vorzugsweise dadurch her, daß man eine konzentrierte wäßrig-alkalische Carboxymethylcellulose-Lösung vorlegt, zu dieser unter Rühren im Temperaturbereich von 50 bis 65 °C das Mercaptobenzthiazol zugibt und diese Mischung nach mehrstündiger Reaktionszeit langsam mit der verzweigten aliphatischen Carbonsäure versetzt. Dabei liegt das Masseverhältnis der 3 Wirkstoffe Carboxymethylcellulose, Mercaptobenzthiazol und verzweigte aliphatische Carbonsäure vorzugsweise im Bereiche 1 : 1 : 1 bis 1 : 5 : 50. Wünscht man die Menge an verzweigter aliphatischer Carbonsäure im Gefrierschutzmittelkonzentrat über die durch dieses Mengenverhältnis gegebene obere Grenze weiter zu erhöhen, so setzt man dem Konzentrat die erwünschte Säuremenge bzw. entsprechende Salze zusätzlich zu.

Die verzweigten aliphatischen Carbonsäuren der Gruppe a) sind ausgewählt aus 2-Ethylhexansäure, 2,2-Dimethyloctansäure und 3,5,5-Trimethylhexansäure oder Mischungen hiervon. Wegen ihrer leichten Verfügbarkeit und ihrer guten Korrosionsschutzwirkung ist die 2-Ethylhexansäure besonders bevorzugt e)

Die faktultativ zusätzlich einzusetzenden Carbonsäuren der Gruppe e) wählt man vorzugsweise aus aus Sebazinsäure, Caprylsäure, Nonansäure, Decansäure, Undecansäure, Benzoesäure, Zimtsäure, Gluconsäure oder Mischungen hiervon. Besonders bevorzugte Säuren sind Sebazinsäure, Caprylsäure und Zimtsäure. Außer diesen Säuren können die Gefrierschutzmittelkonzentrate mehrbasische Carbonsäuren mit besonders ausgeprägter komplexierender Wirkung enthalten, beispielsweise Weinsäure und insbesondere Citronensäure.

Das wasserlösliche flüssigalkoholische Gefrierpunktserniedrigungsmittel wählt man vorzugsweise aus aus Monoethylenglykol, Diethylenglykol, Propylenglykol, Dipropylenglykol und/oder aus wassermischbaren Monoethern dieser Glykole, beispielsweise aus den Monomethyl-, Monoethyl-, Monopropyl- und Monobutylethern der genannten Glykole. Besonders bevorzugt sind Monoethylenglykol und/oder Propylenglykol. Das Gefrierschutzmittelkonzentrat enthält das wasserlösliche flüssigalkoholische Gefrierpunktserniedrigungsmittel in einer Menge, bezogen auf die Gesamtmischung, von mindestens 40 Gew.-%. Die Obergrenze ergibt sich aus den weiteren essentiellen Komponenten gemäß Anspruch 1 zu 99,985 Gew.-%. Besonders bevorzugt ist es, daß das Gefrierschutzmittelkonzentrat mindestens 90 Gew.-% des flüssigalkoholischen Gefrierpunktserniedrigungsmittels enthält.

Das Gefrierschutzmittelkonzentrat kann weitere aus dem Stand der Technik bekannte Inhibitorkomponenten enthalten. Beispielsweise genannt seien Zinksalze sowie Alkali- oder Ammoniummolybdate, die in Mengen von 0,01 bis 2 Gew.-% eingesetzt werden können.

Das erfindungsgemäße Gefrierschutzmittelkonzentrat kann als solches in den Handel kommen und vor dem Einfüllen in die Kühlsysteme, beispielsweise die Kraftfahrzeugkühler, mit Wasser auf den erwünschten Konzentrationsbereich verdünnt werden. Zur möglichen Ersparnis von Transportkosten ist es jedoch auch denkbar, zunächst ein Vorgemisch herzustellen, das die Korrosionsschutzkomponenten im gewünschten Mischungsverhältnis und gar kein oder aber eine verringerte Menge flüssigalkoholisches Gefrierpunktserniedrigungsmittel enthält. Vorzugsweise stellt man jedoch ein Vorgemisch in Form einer Lösung in dem Gefrierpunktserniedrigungsmittel her, die gegenüber dem vorstehend beschriebenen Konzentrat etwa die etwa 3- bis etwa 6-fache Menge an Korrosionsschutzwirkstoffen enthält. Das Vorgemisch kann in dieser konzentrierten Form in den Handel kommen, wobei es vor dem Einfüllen in die Kühlanlagen mit weiterem flüssigalkoholischem Gefrierpunktserniedrigungsmittel im Verhältnis 1 : 2 bis 1 : 5 abgemischt wird.

Beispielsweise besteht ein Vorgemisch aus :
a) 0,005 bis 5 Gewichtsteilen der verzweigten aliphatischen Carbonsäure mit 6 bis 11 C-Atomen oder eines Gemischs mehrerer deratiger Säuren,
b) 0,005 bis 0,04 Gewichtsteilen Tolyltriazol,
c) 0,005 bis 0,04 Gewichtsteilen Benzotriazol.

Weiterhin enthält dieses Vorgemisch vorzugsweise zusätzlich etwa 0,5 bis etwa 15 Gewichtsteile der Säuren der Gruppe e) sowie 0,002 bis 0,5 Gewichtsteile Mercaptobenzthiazol und/oder 0,002 bis 0,5 Gewichtsteile Carboxymethylcellulose.

Wenn vorstehend von Gewichtsteilen die Rede ist, so bedeutet dies, daß man die Wirkstoffe in den entsprechenden relativen Mengenverhältnissen einsetzt. Dabei kann als ein Gewichtsteil eine beliebige Gewichtsmenge, beispielsweise 1 kg, angesetzt werden. Das Vorgemisch kann durch Abmischen der Komponenten in Pulverform hergestellt werden. Die Carbonsäuren setzt man vorzugsweise als Alkalimetall- und/oder Ammoniumsalze ein. Vorzugsweise fügt man dem Vorgemisch eine solche Menge des flüssigalkoholischen Gefrierpunkterniedrigungsmittels zu, daß eine klare Lösung entsteht. Aus dieser klaren Lösung kann am Einsatzort durch Verdünnen mit weiterem flüssigalkoholischen Gefrierpunkterniedrigungsmittel, beispielsweise in den vorstehend genannten Mengenverhältnissen, ein einsatzbereites Konzentrat erhalten werden. Durch Vermischen des Konzentrats mit Wasser, beispielsweise im Mengenverhältnis von 10 : 90 bis 90 : 10, kann das anwendungsfertige Kühlmittel hergestellt werden.

Die Erfindung umfaßt ebenfalls diese wäßrige Kühlmittelzusammensetzung mit einem gegenüber dem Gefrierpunkt von reinem Wasser erniedrigten Gefrierpunkt, die man durch dieses Vermischen erhalten kann. Selbstverständlich wäre es möglich, eine derartige wäßrige Kühlmittelzusammensetzung auch durch Auflösen der Einzelkomponenten in Wasser herzustellen. Dies ist jedoch arbeitsaufwendig und daher weniger bevorzugt.

### Ausführungsbeispiele

Erfindungsgemäße Konzentrate sowie Vergleichskonzentrate wurden gemäß der Tabelle 1 hergestellt. Den Konzentraten wurde soviel NaOH zugesetzt, daß sich nach Vermischen der Konzentrate mit Wasser im Volumenverhältnis 1 : 1 ein pH-Wert im Bereich zwischen 7,5 und 8,2 einstellte. Zur Überprüfung der Korrosionsschutzwirkung wurden die Konzentrate im Verhältnis 1 : 1 mit Wasser vermischt. Der pH-Wert der Frostschutzmittellösungen wurde auf 7,8 eingestellt.

Die Korrosionsschutzwirkung wurde gemäß der ASTM-Prüfvorschrift D 1384-70 überprüft. Hierbei werden Probekörper von Metallen, die typischer Weise in Kraftfahrzeugkühlsystemen vorkommen, vollständig für 336 Stunden in die Frostschutzmittellösung bei gleichzeitiger Belüftung eingetaucht. Die Temperatur betrug 88 °C. Die korrosionsverhindernden Eigenschaften der Probelösungen wurden auf der Basis der Gewichtsveränderungen der Probekörper bewertet. Dabei wurde jeder Versuch 3-fach durchgeführt und der Durchschnitt der Gewichtsveränderungen für jedes Metall bestimmt. Vor Versuchsbeginn wurden die Probekörper mit einer feuchten Scheuerbürste unter Verwendung von gemahlenem Bimssteinpulver glänzend blank gerieben, mit Wasser und anschließend mit Azeton gespült, getrocknet und gewogen. Nach Versuchsende wurden die Korrosionsprodukte auf den Probekörpern durch Abbürsten und durch Eintauchen in Säurelösungen entfernt. Danach wurden die Probekörper wiederum gespült, getrocknet und gewogen. Die Tabelle 2 enthält die Gewichtsverluste (in g/m²) für unterschiedliche Metalle unter Verwendung der Beispiels- bzw. Vergleichslösungen.

**Tabelle 1: Zusammensetzung von Gefrierschutzmittelkonzentraten (Gew.-%). Der Rest zu 100 Gew.-% ist jeweils Monoethylenglykol.**

| | Beisp. 1 | Beisp. 2 | Beisp. 3 | Beisp. 4 | Beisp. 5 | Vergl. 1 | Vergl. 2 |
|---|---|---|---|---|---|---|---|
| | | | | | | | |
| 2-Ethylhexansäure | 1,3 | 2,5 | 1,5 | 1,5 | 1,5 | 1,5 | 1,5 |
| Mercaptobenzthiazol | 0,005 | 0,01 | 0,01 | 0,01 | - | 0,01 | 0,01 |
| Carboxymethylcellulose | 0,005 | 0,01 | 0,01 | 0,01 | - | 0,01 | 0,01 |
| Tolyltriazol | 0,01 | 0,015 | 0,015 | 0,015 | 0,02 | - | 0,1 |
| Benzotriazol | 0,01 | 0,015 | 0,015 | 0,015 | 0,02 | 0,1 | - |
| Sebacinsäure | 1,0 | 1,0 | - | - | 1,0 | 1,0 | 1,0 |
| Caprylsäure | 1,0 | - | - | - | - | - | - |
| Zimtsäure | - | - | 1,0 | - | - | - | - |
| Natriumhydroxid | (so daß pH der Anwendungslösung 7,5 - 8,2) | | | | | | |

**Tabelle 2: Korrosionsschutzprüfung nach ASTM-D 1384 - pH 7,8 (Gewichtsverlust in g/m²)**

| Metalle | Beisp.1 | Beisp. 2 | Beisp. 3 | Beisp.4 | Beisp.5 | Vergl.1 | Vergl. 2 |
|---|---|---|---|---|---|---|---|
| | | | | | | | |
| Kupfer | 0 | 0 | 0 | 0 | 0 | 0,44 | 0,16 |
| Lot | 0,55 | 0,4 | 0 | 1,2 | 0,53 | 1,25 | 0,41 |
| Messing | 0 | 0,12 | 0 | 0 | 0 | 0,71 | 0,28 |
| Stahl | 0 | 0 | 0 | 0 | 0 | 0,19 | 0 |
| Grauguß | 0 | 0 | 0 | 0 | 0 | 0 | 0 |
| AlSiCu | 0 | 0,51 | 0,1 | 0,29 | 0,33 | 0 | 0,38 |
| AlSi | 0,72 | 0,55 | 0,42 | 0,59 | 0,61 | 0,86 | 0,85 |

## Patentansprüche

1. Gefrierschutzmittelkonzentrat, welches ein wasserlösliches flüssigalkoholisches Gefrierpunktserniedrigungsmittel, mindestens eine korrosionsinhibierende Carbonsäure und mindestens zwei unterschiedliche Triazole enthält **dadurch gekennzeichnet, daß** es frei ist von Nitrit, Phosphat, Borat und Silicat und daß es, bezogen auf die Gesamtzusammensetzung,
a) 0,005 bis 5 Gew.-% einer verzweigten aliphatischen Carbonsäure ausgewählt, aus 2-Ethylhexansäure, 2,2-Dimethyloctansäure und 3,5,5-Trimethylhexansäure oder Mischungen hiervon,
b) 0,005 bis 0,04 Gew.-% Tolyltriazol,
c) 0,005 bis 0,04 Gew.-% Benzotriazol
d) 40 bis 99,985 Gew.-% flüssigalkoholisches Gefrierpunktemiedrigungsmittel
enthält, wobei ein Rest zu 100 Gew-% aus Alkalien, Wasser und/oder weiteren Wirkstoffen besteht.

2. Gefrierschutzmittelkonzentrat nach Anspruch 1, **dadurch gekennzeichnet, daß** es
a) 0,5 bis 4 Gew.-% der verzweigten aliphatischen Carbonsäure(n),
b) 0.005 bis 0.03 Gew.-% Tolyltriazol,
c) 0,005 bis 0,03 Gew.-% Benzotriazol enthält.

3. Gefrierschutzmittelkonzentrat nach einem oder beiden der Ansprüche 1 und 2, **dadurch gekennzeichnet, daß** es als weiteren Wirkstoff zusätzlich
e) 0,5 bis 15 Gew.-% einer oder mehrerer linearer gesättigter oder ungesättigter aliphatischer, araliphatischer oder aromatischer ein- oder mehrbasicher Carbonsäuren mit 4 bis 20 C-Atomen enthält.

4. Gefrierschutzmittelkonzentrat nach einem oder mehreren der Ansprüche 1 bis 3, **dadurch gekennzeichnet, daß** es als weiteren Wirkstoff zusätzlich 0,002 bis 0,5 Gew.-% Mercaptobenzthiazol enthält.

5. Gefrierschutzmittelkonzentrat nach Anspruch 4, **dadurch gekennzeichnet, daß** es 0,005 bis 0,05 Gew.-% Mercaptobenzthiazol enthält.

6. Gefrierschutzmittelkonzentrat nach einem oder mehreren der Ansprüche 1 bis 5, **dadurch gekennzeichnet, daß** es als weiteren Wirkstoff zusätzlich 0,002 bis 0,5 Gew.-% Carboxymethylcellulose enthält.

7. Gefrierschutzmittelkonzentrat nach Anspruch 6, **dadurch gekennzeichnet, daß** es 0,005bis 0,05 Gew.-% Carboxymethylcellulose enthält.

8. Gefrierschutzmittelkonzentrat nach einem oder mehreren der Ansprüche 1 bis 7, **dadurch gekennzeichnet, daß** die Carbonsäuren der Gruppe e) ausgewählt sind aus Sebacinsäure. Caprylsäure, Nonansäure, Decansäure, Undecansäure, Benzoesäure, Zimtsäure und Gluconsäure, oder Mischungen hiervon.

9. Gefrierschutzmittelkonzentrat nach einem oder mehreren der Ansprüche 1 bis 8, **dadurch gekennzeichnet, daß** das wasserlösliche flüssigalkoholische Gefrierpunktserniedrigungsmittel ausgewählt ist aus Monoethylenglykol, Diethylenglykol, Propylenglykol, Dipropylenglykol und/oder aus den Monomethyl-, Monoethyl-, Monopropyl- und Monobutylether der genannten Glykole.

10. Wäßrige Kühlmittelzusammensetzung mit einem gegenüber dem Gefrierpunkt von reinem Wasser erniedrigten Gefrierpunkt und mit einer Zusammensetzung, die man erhält, wenn man 10 bis 90 Gewichtsteile der Konzentrats nach einem oder mehreren der Ansprüche 1 bis 9 mit 90 bis 10 Gewichtsteilen Wasser vermischt.

## Claims

1. An anti-freeze agent concentrate containing a water-soluble liquid alcoholic freezing-point depressant, at least one corrosion-inhibiting carboxylic agent and at least two different triazoles, **characterized by** being free from nitrite, phosphate, borate and silicate and by containing, based on the total composition:
a) from 0.005 to 5% by weight of a branched aliphatic carboxylic acid selected from 2-ethylhexanoic acid, 2,2-dimethyloctanoic acid and 3,5,5-trimethylhexanoic acid or mixtures thereof;
b) from 0.005 to 0.04% by weight of tolyltriazole;
c) from 0.005 to 0.04% by weight of benzotriazole;
d) from 40 to 99.985% by weight of a liquid alcoholic freezing-point depressant;
the balance to 100% by weight consisting of alkalis, water and/or other active ingredients.

2. The anti-freeze agent concentrate according to claim 1, **characterized by** containing:
a) from 0.5 to 4% by weight of said branched aliphatic carboxylic acid(s);
b) from 0.005 to 0.03% by weight of tolyltriazole;
c) from 0.005 to 0.03% by weight of benzotriazole.

3. The anti-freeze agent concentrate according to one or both of claims 1 and 2, **characterized by** additionally containing as a further active ingredient:
e) from 0.5 to 15% by weight of one or more linear saturated or unsaturated aliphatic, araliphatic or aromatic monobasic or polybasic carboxylic acids having from 4 to 20 carbon atoms.

4. The anti-freeze agent concentrate according to one or more of claims 1 to 3, **characterized by** additionally containing from 0.002 to 0.5% by weight of mercaptobenzothiazole as a further active ingredient.

5. The anti-freeze agent concentrate according to claim 4, **characterized by** containing from 0.005 to 0.05% by weight of mercaptobenzothiazole.

6. The anti-freeze agent concentrate according to one or more of claims 1 to 5, **characterized by** additionally containing from 0.002 to 0.5% by weight of carboxymethylcellulose as a further active ingredient.

7. The anti-freeze agent concentrate according to claim 6, **characterized by** containing from 0.005 to 0.05% by weight of carboxymethylcellulose.

8. The anti-freeze agent concentrate according to one or more of claims 1 to 7, **characterized in that** the carboxylic acids of group e) are selected from sebacic, caprylic, nonanoic, decanoic, undecanoic, benzoic, cinnamic and gluconic acids or mixtures thereof.

9. The anti-freeze agent concentrate according to one or more of claims 1 to 8, **characterized in that** said water-soluble liquid alcoholic freezing-point depressant is selected from monoethylene glycol, diethylene glycol, propylene glycol, dipropylene glycol and/or from the monomethyl, monoethyl, monopropyl and monobutyl ethers of the above glycols.

10. Aqueous cooling agent composition having a freezing point which is depressed with respect to the freezing point of pure water and having a composition obtained by mixing from 10 to 90 parts by weight of the concentrate according to one or more of claims 1 to 9 with from 90 to 10 parts by weight of water.

## Revendications

1. Concentré d'agent antigel qui renferme un agent d'abaissement du point de congélation alcoolique sous forme liquide, soluble dans l'eau, au moins un acide carboxylique inhibiteur de corrosion et au moins deux triazoles différents,
**caractérisé en ce qu'**
il est dépourvu de nitrite, de phosphate, de borate et de silicate et, qu'il renferme rapporté à la composition totale :
a) de 0,005 à 5 % en poids d'un acide carboxylique aliphatique ramifié choisi parmi l'acide 2-éthylhexanoïque, l'acide 2,2-diméthyloctanoïque et l'acide 3,5,5 triméthylhexanoïque ou des mélanges de ceux-ci,
b) de 0,005 à 0,04 % en poids de tolyltriazole,
c) de 0,005 à 0,04 % en poids de benzotriazole,
d) de 40 à 99,985 % en poids d'agent d'abaissement du point de congélation alcoolique sous forme liquide,
dans lequel un reste à 100 % en poids consiste en des alcool, de l'eau et/ou d'autres principes actifs.

2. Concentré d'agent antigel selon la revendication 1,
**caractérisé en ce qu'**
il renferme :
a) de 0,005 à 4 % en poids d'acide(s) carboxylique(s) aliphatique(s) ramifié (s)
b) de 0,005 à 0,03 % en poids de tolyltriazole,
c) de 0,005 à 0,03 % en poids de benzotriazole.

3. Concentré d'agent antigel selon l'une ou les deux revendications 1 et 2,
**caractérisé en ce qu'**
il renferme comme autre principe actif en supplément :
e) de 0 , 5 à 15 % en poids d'un ou plusieurs acides carboxyliques linéaires saturés ou non saturés, aliphatiques, araliphatiques ou aromatiques mono- ou pluribasiques ayant de 4 à 20 atomes de carbone.

4. Concentré d'agent antigel selon l'une ou plusieurs des revendications 1 à 3,
**caractérisé en ce qu'**
il renferme comme autre principe actif en supplément, de 0,002 à 0,5 % en poids de mercaptobenzothiazole.

5. Concentré d'agent antigel selon la revendication 4,
**caractérisé en ce qu'**
il contient de 0,005 à 0,05 % en poids de mercaptobenzothiazole.

6. Concentré d'agent antigel selon l'une ou plusieurs des revendications 1 à 5,
**caractérisé en ce qu'**
il contient comme autre principe actif, en supplément de 0,002 à 0,5 % en poids de carboxyméthylcellulose.

7. Concentré d'agent antigel selon la revendication 6,
**caractérisé en ce qu'**
il contient de 0,005 à 0,05 % en poids de carboxyméthylcellulose.

8. Concentré d'agent antigel selon l'une ou plusieurs des revendications 1 à 7,
**caractérisé en ce que**
les acides carboxyliques du groupe e) sont choisis parmi l'acide sébacique, l'acide caprylique, l'acide nonanoïque, l'acide decanoïque, l'acide undecanoïque, l'acide benzoïque, l'acide cinnamique et l'acide gluconique ou des mélanges de ceux-ci.

9. Concentré d'agent antigel selon l'une ou plusieurs des revendications 1 à 8,
**caractérisé en ce que**
l'agent d'abaissement du point de congélation alcoolique sous forme liquide soluble dans l'eau est choisi parmi le monoéthylèneglycol, le diéthylèneglycol, le propylèneglycol, le dipropylèneglycol, et/ou parmi les éthers monométhyliques, monoéthyliques, monopropyliques, et monobutyliques des glycols cités

10. Composition aqueuse d'agent de réfrigération ayant un point de congélation abaissé par rapport au point de congélation de l'eau pure, et ayant une composition que l'on obtient lorsqu'on mélange de 10 à 90 parties en poids du concentré selon l'une ou plusieurs des revendications 1 à 9, avec 90 à 10 parties en poids d'eau.
